# EUROPÄISCHE PATENTANMELDUNG

(11) **EP 4 671 593 A1**
(43) Veröffentlichungstag der Anmeldung: **31.12.2025**
(21) Anmeldenummer: 24184151.9
(22) Anmeldetag: 25.06.2024
(51) Int. Cl.: F16L 59/14, B29C 45/14, F16L 59/18, F16L 25/14, F16L 59/16, F16L 59/22

(54) **VERFAHREN ZUR HERSTELLUNG VON VORISOLIERTEN FITTINGS**

(71) Anmelder: Georg Fischer Rohrleitungssysteme AG, 8201 Schaffhausen (CH)
(72) Erfinder: JETTE, Daniel, LJA Oakville L6J 0A2 (CA); WISSLER, Frank, 78337 Öhningen (DE); MURBACH, Oliver, 8410 Thayngen (CH); SOSINSKI, Jens Martin, 78176 Blumberg (DE); STRÖMBERG, Dan, Riverside, CA 92503 (US)
(74) Vertreter: Fenner, Seraina

(57) **Zusammenfassung**

Verfahren zur Herstellung eines vorisolierten Fittings beinhaltend:
▪ Bereitstellen einer Form, wobei die Form offene Stirnseiten und eine Innenkontur aufweist, wobei die Innenkontur der Fittingaussenkontur eines vorisolierten Fittings entspricht,
▪ Auftragen einer Beschichtung an der Innenkontur, wobei die aufgetragene Beschichtung nach dem Ausformen den Aussenmantel des vorisolierten Fittings bildet,
▪ Anbringen eines in der Form innenliegenden Fittings, wobei das innenliegende Fitting das Medium durchströmende Fitting im vorisolierten Fitting bildet,
▪ Verschliessen der Stirnseiten der Form mittels Abschlusskappen,
▪ Einbringen eines flüssigen Isolationsmaterials in den zwischen der Innenkontur der Form, der Abschlusskappen und dem innenliegenden Fitting gebildeten Hohlraum und
▪ Entfernen der Form und der Abschlusskappen.

## Beschreibung

Die Erfindung betrifft ein Verfahren zur Herstellung eines vorisolierten Fittings und das vorisolierte Fitting selbst, beinhaltend:
▪ Bereitstellen einer Form,
▪ Anbringen eines in der Form innenliegenden Fittings,
▪ Einbringen eines flüssigen Isolationsmaterials in den gebildeten Hohlraum und
▪ Entfernen der Form.

Bei Anwendungen bei denen eine gute Dämmung des Mediums in der Rohrleitung gegenüber den Umgebungsbedingungen benötigt wird, werden meist vorisolierte Rohrleitungen eingesetzt. Bspw. werden solch vorisolierte Rohrleitungen für den Transport bei Kälteträgermedien eingesetzt. Um das Medium transportierende Rohr ist meist eine isolierende Dämmschicht angeordnet, welche von einer Aussenhaut umgeben ist, die zum Schutz der Dämmschicht gegen äussere Einflüsse wie bspw. Feuchtigkeit dient. Der Aussenmantel kann auch durch ein konzentrisch angeordnetes Aussenrohr gebildet werden.

Das Verbinden solcher vorisolierter Rohrleitungen ist entsprechend aufwendig, da an den zu verbindenden Enden die Isolation erst entfernt werden muss und nach dem Verbinden mit einem Rohrverbindungsformteil die Isolation wieder manuell angebracht werden muss.

Die EP 1 909 018 B1 offenbart ein Rohrverbindungsformteil mit thermischer Isolierung. Beim Anbringen dieses Rohrverbindungsformteils ist ein Isolieren nach dem Einbau in das Rohrleitungssystem nicht mehr nötig, da die Isolation bereits am Rohrverbindungsformteil angeordnet ist, wodurch der Aufwand für die nachträgliche Isolierung eingespart werden kann. Zur Herstellung des Rohrverbindungsformteils wird das Innenrohr zuerst in eine Form eingelegt, in der es dann vom Isolationsschaum umschäumt wird. Anschliessend wird es in eine zweite Form eingelegt, in der anschliessend die Isolationsschicht mit dem Kunststoff des Aussenmantels umgossen wird. Nachteilig hierbei ist, dass dieses Verfahren nur für Rohrverbindungsformteile bis zu einem Durchmesser von 225 mm umsetzbar ist.

Bei Fittings mit einem Durchmesser des Innenfittings grösser gleich 250 mm wird das vorisolierte Fitting bisher aus bestehenden Rohren zusammengesetzt bzw. zusammengeschweisst. Dazu wird ein Polyethylen-Rohr für den Aussenmantel in Rohrsegmente geschnitten, welche dann zu einem Fittingaussenmantel zusammengeschweisst werden, in den das innenliegende Fitting eingefügt und befestigt wird. Daraufhin werden die Stirnflächen mit Abschlusselementen verschlossen und das Isolationsmaterial in den Zwischenraum zwischen dem aus Segmenten gebildeten Aussenmantel und dem innenliegenden Fitting eingespritzt und ausgehärtet. Woraufhin die Abschlusselemente entfernt werden und eine Nachbearbeitung des vorisolierten Fittings erfolgt.

Dieses Herstellungsverfahren hat den Nachteil, dass ein vorisoliertes Fitting einen Aussenmantel aufweist, der eine massive Wandstärke aufweist, da der Aussenmantel aus herkömmlichen Rohren zusammengeschweisst wurde und die Wandstärke nicht für den Einsatz als vorisoliertes Fitting benötigt wird. Die massive Wandstärke wird ausschliesslich benötigt, um die Rohre vorab zu transportieren und zu lagern damit keine zu grosse Verformung der Rohre erfolgt. Zudem entsteht durch das Zuschneiden der Rohrsegmente viel unbrauchbarer Rohrverschnitt, sowie die Herstellung sehr zeitintensiv ist. All dies bringt hohe Herstellkosten eines vorisolierten Fittings mit sich.

Es ist Aufgabe der Erfindung ein Verfahren zur Herstellung eines vorisolierten Fittings und ein vorisoliertes Fitting vorzuschlagen, das eine wirtschaftliche Herstellung für vorisolierte Fittings für grosse Dimensionen erlaubt und das Fitting für dessen Anwendung nicht überdimensioniert ist sowie dass der Herstellung reproduzierbar ist und die vorisolierten Fittings immer gleich sind.

Diese Aufgabe wird erfindungsgemäss dadurch gelöst, dass das Verfahren zur Herstellung eines vorisolierten Fittings beinhaltet:
▪ Bereitstellen einer Form, wobei die Form offene Stirnseiten und eine Innenkontur aufweist, wobei die Innenkontur einer Fittingaussenkontur des vorisolierten Fittings entspricht,
▪ Auftragen einer Beschichtung an der Innenkontur, wobei die aufgetragene Beschichtung nach dem Ausformen den Aussenmantel des vorisolierten Fittings bildet,
▪ Anbringen eines in der Form innenliegenden Fittings, wobei das innenliegende Fitting das Medium durchströmte Fitting im vorisolierten Fitting bildet,
▪ Verschliessen der Stirnseiten der Form mittels Abschlusskappe,
▪ Einbringen eines flüssigen Isolationsmaterials in den zwischen der Innenkontur der Form, der Abschlusskappen und dem innenliegenden Fitting gebildeten Hohlraum und
▪ Entfernen der Form und der Abschlusskappen.

Das erfindungsgemässe Verfahren zur Herstellung eines vorisolierten Fittings beinhaltet die folgenden Schritte:
Ein Bereitstellen einer Form, wobei die Form offene Stirnseiten und eine Innenkontur aufweist, wobei die Innenkontur der Fittingaussenkontur eines vorisolierten Fittings bzw. des Endprodukts entspricht. Um die unterschiedlichen Formen und Grössen der Fittings herzustellen, benötigt es vorzugsweise jeweils mindestens eine Form, die dem benötigten Fitting entspricht. Es ist vorteilhaft, wenn die Fittings als Bögen, T-Stücke, Winkelstücke, gerades Kupplungsstück, jeweils für die Verbindung derselben Rohrdurchmesser oder als Reduktionsstücke ausgebildet sind.

Anschliessend erfolgt ein Auftragen einer Beschichtung an der Innenkontur der Form, wobei die aufgetragene Beschichtung nach dem Aushärten und Ausformen den Aussenmantel des vorisolierten Fittings bildet. Das heisst, die Beschichtung lässt sich beim Ausformen von der Oberfläche der Innenkontur ablösen und bildet einen geschlossenen Aussenmantel des vorisolierten Fittings.

Nach dem Auftragen der Beschichtung der Innenkontur wird ein innenliegendes Fitting in der Form angeordnet, wobei das innenliegende Fitting das Medium durchströmte Fitting im vorisolierten Fitting bildet. Die Form umgibt das innenliegende Fitting. Das innenliegende Fitting entspricht vorzugsweise der Gestalt der Form bzw. des vorisolierten Fittings, das heisst, wenn das Fitting beispielsweise ein vorisoliertes T-Fitting wird, weist das innenliegende Fitting die Gestalt eines T-Stücks auf. Anschliessend wird die Form an den Stirnseiten mittels Abschlusskappen verschlossen. Die Stirnseiten der Form bilden die Stirnseiten des vorisolierten Fittings bei allen Bauformen. Durch die Abschlusskappen an den Stirnseiten, die Form und dem innenliegenden Fitting bildet sich dazwischen ein Hohlraum in den das Isolationsmaterial eingebracht wird. Dazu wird flüssiges Isolationsmaterial in den gebildeten Hohlraum eingeleitet und anschliessend härtet das flüssige Schaum-Isolationsmaterial aus. Nach dem Aushärten werden die Abschlusskappen und die Form entfernt. Anschliessend werden optional noch Nacharbeiten am vorisolierten Fitting durchgeführt.

Vorzugsweise wird die Form durch zwei sich gegenüberliegende Formhälften gebildet. Vorzugsweise sind die Formhälften symmetrisch ausgebildet. Die Trennebene der beiden miteinander verspannten Formhälften zur Bildung der Form verläuft vorzugsweise entlang der Mittelachse bzw. die Mittelachse liegt in der Trennebene. Vorzugsweise weisen die Formhälften ein formsteifes und stabiles Material auf.

Als bevorzugte Ausführungsform des erfindungsgemässen Verfahrens hat sich gezeigt, wenn die aufgetragene Beschichtung auf eine silikonhaltige Innenkontur appliziert wird. Dies gewährleistet beim Ausformen des vorisolierten Fittings ein Gutes aus der Form lösen, so dass die Beschichtung nach dem Ausformen den Aussenmantel des vorisolierten Fittings bildet.

Vorzugsweise wird die Formhälfte unteranderem durch ein Innenkontur aufweisendes Trennschild gebildet. Dazu wird das Trennschild in die Formhälfte eingelegt. Es ist vorteilhaft, wenn das Trennschild an der nach innen gerichteten Seite der Formhälfte befestigt wird und die beiden Formhälften, welche jeweils vorzugsweise ein innenliegendes Trennschild als Bestanteil aufweisen, die Form bilden. Vorzugsweise wird die Innenseite der Formhälfte vollständig durch das innenkonturaufweisende Trennschild abgedeckt.

Es ist vorteilhaft, wenn die Formhälfte durch eine kohlefaserverstärkte Aussenschicht und die Innenkontur durch ein Trennschild aus Silikon gebildet wird. Die Aussenschicht gibt der Formhälfte die benötigte Steifigkeit und Stabilität und das Trennschild aus Silikon ermöglicht ein einfaches Ausformen und des vorisolierten Fittings bzw. Ablösen der Beschichtung von der Innenkontur der Form.

Als bevorzugtes Material für die Beschichtung der Innenkontur wird ein flüssiges Polyurea aufgetragen. Dieses ermöglicht ein gutes Ausformen und bildet anschliessend einen dichten den Anforderungen entsprechenden Aussenmantel der dünnwandig ausgebildet ist.

Es hat sich als vorteilhaft gezeigt, wenn das flüssige Isolationsmaterial durch einen Polyurethan-Schaum gebildet wird. Dieses Material erfüllt die Anforderungen einer guten Dämmung und ist durch die flüssige Form einfach in den Hohlraum mittels eines Schlauchs, der an der Form oder Abschlusskappe eingeleitet wird, einfüllbar und härtet anschliessend aus, woraufhin die Form und die Abschlusskappen entfernt werden können.

Als vorteilhaft hat sich gezeigt, wenn die Beschichtung an der Innenkontur durch Sprühen oder Streichen aufgetragen wird. Dabei ist zu beachten, dass die Beschichtung ausreichend dick für eine gewisse Stabilität und durchgehend ohne Lücken aufgetragen wird, damit ein geschlossener Aussenmantel gebildet wird.

Vorzugsweise wird das innenliegende Fitting konzentrisch in der Form angeordnet. Dies gewährt einen gleichmässig verlaufenden Hohlraum und somit auch eine Isolationsschicht, die überall gleich dick ausgebildet ist.

Als bevorzugt hat sich gezeigt, wenn an den Enden des innenliegenden Fittings die Abschlusskappen angeordnet werden, wodurch das innenliegende Fitting gegenüber der Innenkontur der Form zentriert wird und gleichzeitig die Stirnseiten der Form verschliesst. Es ist vorteilhaft, wenn die Abschlusskappen eine Bohrung entsprechend dem Aussendurchmesser des innenliegenden Fittings aufweisen, die über die Enden des innenliegenden Fittings geschoben werden und ebenfalls der Zentrierung des innenliegenden Fittings gegenüber der Form bzw. der Formhälften dient. Bevor das flüssige Isolationsmaterial in den Hohlraum gefüllt wird, ist es vorteilhaft, wenn das innenliegende Fitting und die Form genau zueinander ausgerichtet werden.

Es ist vorteilhaft, wenn das Einfüllen des flüssigen Isolationsmaterials an der tiefst liegenden Stelle erfolgt und das Material hochgedrückt bzw. hineingepumpt wird. Zur Indikation, ob der Hohlraum vollständig gefüllt ist, ist an der obersten Stelle des Fittings ein Indikator vorzusehen, der anzeigt, wenn das Isolationsmaterial die oberste Stelle erreicht hat. Selbstverständlich kann dies auch über eine vorbestimmte Menge an Isolationsmaterial gelöst werden, die passend für den Hohlraum bereitgestellt wird oder über das Erfassen des Gewichts des vorisolierten Fittings.

Es hat sich auch als vorteilhaft gezeigt, wenn ein innenliegendes Fitting mit einem Aussendurchmesser von ≥ 250mm angeordnet wird. Es ist vorteilhaft, wenn das erfindungsgemässe Verfahren hauptsächlich für grosse vorisolierte Fittings eingesetzt wird, da die kleineren Dimensionen noch auf Spritzgussmaschinen herstellbar sind und die Stückzahl von grossen Dimensionen eher klein ist.

Das erfindungsgemässe vorisolierte Fitting wird durch das erfindungsgemässe Verfahren hergestellt und weist einen Aussenmantel auf, der durch eine ausgehärtete Beschichtung gebildet ist, ein innenliegendes Fitting und eine dazwischen angeordnete Isolationsschicht.

Alle Ausgestaltungmöglichkeiten sind untereinander frei kombinierbar sowie zur Vermeidung von Wiederholungen sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1a-1h: die Schritte des Herstellungsverfahrens und
- Fig. 2a-2f: mögliche Ausführungsformen eines erfindungsgemässen vorisolierten Fittings, wobei die Auflistung nicht abschliessend ist.

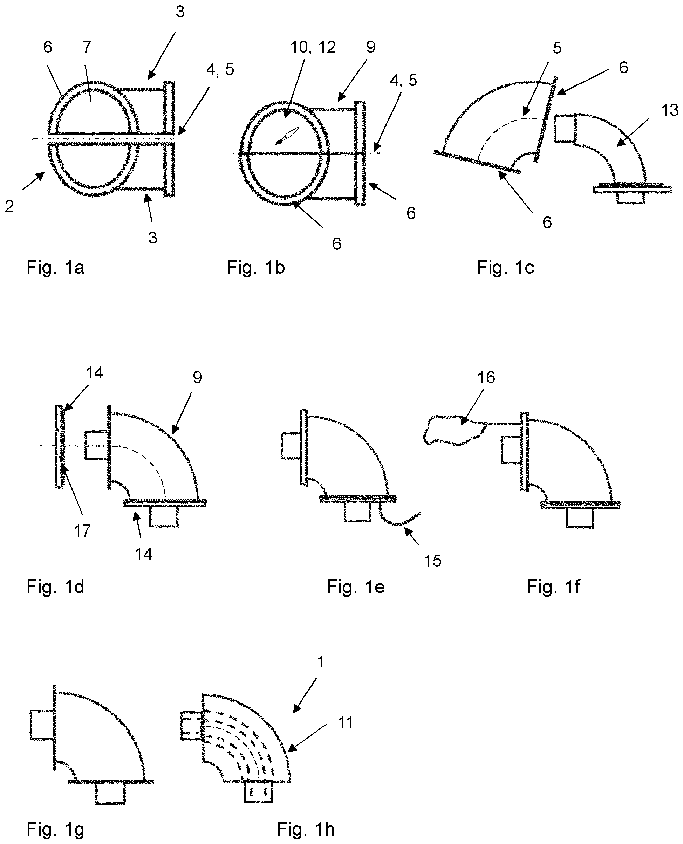

Die in Fig. 1a-1f dargestellten Abbildungen zeigen schrittweise das erfindungsgemässe Verfahren zur Herstellung eines erfindungsgemässen vorisolierten Fittings 1. In Fig. 1a ist das Bereitstellen der Form 2, welche vorzugsweise durch zwei Formhälften 3 gebildet wird, aufgezeigt. Die Trennebene 4 verläuft entlang der Mittelachse 5 bzw. die Mittelachse 5 liegt in der Trennebene 4 des vorisolierten Fittings 1. Die Form 2 weist zwei offene Stirnseiten 6 auf, welche beim Fitting 1 die Stirnseiten bilden. Zudem weist die Form 1 eine Innenkontur 7 auf, die der Aussenkontur des vorisolierten Fittings 1 entspricht. Es ist vorteilhaft, wenn die Formhälften 3 aus einer kohlefaserverstärkten Aussenschicht 9 und einem innenliegenden Trennschild 10 aus Silikon gebildet werden. Auf die Innenkontur 7 wird eine Beschichtung 12 aufgetragen, was in Fig. 1b aufgezeigt wird. Die Beschichtung 12 bildet im ausgehärteten Zustand am erfindungsgemässen vorisolierten Fitting 1 den Aussenmantel 11 des Fittings 1. Die Beschichtung 12 ist vorzugsweise flächendeckend aufzutragen damit der Aussenmantel 11 am Fitting 1 seine Funktion zum Schutz des Fittings 1 gewährleistet. In Fig. 1c wird das Anbringen des innenliegenden Fittings 13 aufgezeigt. Der hier beispielhaft dargestellte Fitting 1 ist ein Bogenstück, selbstverständlich ist das erfindungsgemässe Verfahren für alle Arten von Fittings möglich und das Anbringen eines innenliegenden T-Fittings für ein vorisolierter T-Fitting erfolgt entweder bevor die Formhälften zu einer Form geschlossen werden oder das innenliegende T-Fitting ist demontierbar bzw. wird erst in der Form zum T-Stück montiert oder gefügt. Zur Bildung eines geschlossenen Hohlraums, der mit dem Isolationsmaterial gefüllt wird, wird an der Stirnseite 6 eine Abschlusskappe 14 angebracht zum Verschliessen der Stirnseite 6, siehe Fig. 1d. Es ist vorteilhaft, wenn eine Bohrung 17 in der Abschlusskappe 14 angeordnet ist, die dem Aussendurchmessers des innenliegenden Fittings 13 entspricht, wodurch die Abschlusskappe 14 mit dem Aussendurchmesser optimal abschliesst und zudem kann die Abschlusskappe vorzugsweise zur Justierung des innenliegenden Fittings 13 gegenüber der Form 2 genutzt werden. Vorzugsweise wird das innenliegende Fitting 13 gegenüber der Form 2 ausgerichtet, damit das innenliegende Fitting 13 konzentrisch angeordnet ist und der Hohlraum konstant verläuft und überall eine möglichst gleich dicke Isolierung gebildet wird. Anschliessend wird das flüssige Isolationsmaterial in den Hohlraum gefüllt. In Fig. 1e wird gezeigt, dass es vorteilhaft ist die Leitung 15 bzw. den Schlauch 15 zum Einfüllen an einer möglichst tiefen bzw. der tiefsten Position der Form 2 vorzusehen und das Isolationsmaterial hinein zu fördern bzw. zu pumpen ist, wodurch Lunkern in der Isolationsschicht vermieden werden können. Zur Indikation, ob der Hohlraum vollständig gefüllt ist, ist an der obersten Stelle wie in Fig. 1f gezeigt eine Indikator 16 vorzusehen. Nach dem Aushärten des Isolationsmaterials wird die Form 2 vom Fitting 1 entfernt bzw. die Innenkontur 7 löst sich von der Beschichtung 12, welche den Aussenmantel 11 des erfindungsgemässen vorisolierten Fittings 1 bildet. Fig. 1g zeigt das Fitting 1 bereits einseitig ausgeformt und Fig. 1h das erfindungsgemässe vorisolierte Fitting 1.

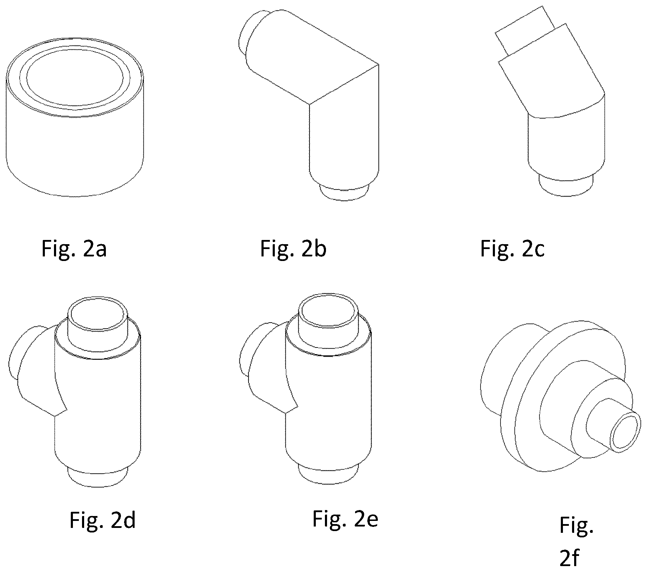

Die in den Figuren 2a bis 2f dargestellten erfindungsgemässen Fittings 1 sollen ein paar beispielhafte Ausführungsformen aufzeigen, wobei diese Auflistung nicht abschliessend ist. 2a zeigt ein Kupplungselement das zum Verbinden zweier Rohrleitungen auf gerader Linie mit denselben Durchmessern eingesetzt wird. Die Figuren 2b und 2c zeigen Umlenkungen von 90 und 45°, wobei diese auch bogenförmig wie in den Figuren 1a-1h ersichtlich, umsetzbar sind. 2d und 2e zeigen T-Stücke, wobei 2e eine Reduktionsstück darstellt. Fig. 2f zeigt ein gerades Reduktionsstück bei dem die eine anzuschliessende Rohrleitung einen grösseren Innendurchmesser als die gegenüberliegende Rohrleitung aufweist.

### Bezugszeichenliste

- 1: Vorisoliertes Fitting
- 2: Form
- 3: Formhälfte
- 4: Trennebene
- 5: Mittelachse
- 6: Stirnseite
- 7: Innenkontur
- 8: Aussenkontur vorisoliertes Fitting
- 9: Kohlefaserverstärkte Aussenschicht
- 10: Trennschild
- 11: Aussenmantel
- 12: Beschichtung
- 13: Innenliegendes Fitting
- 14: Abschlusskappe
- 15: Leitung / Schlauch
- 16: Indikator
- 17: Bohrung

## Patentansprüche

1. Verfahren zur Herstellung eines vorisolierten Fittings (1) beinhaltend:
▪ Bereitstellen einer Form (2), wobei die Form (2) offene Stirnseiten (6) und eine Innenkontur (7) aufweist, wobei die Innenkontur (7) der Fittingaussenkontur (18) eines vorisolierten Fittings (1) entspricht,
▪ Auftragen einer Beschichtung (12) an der Innenkontur (7), wobei die aufgetragene Beschichtung (12) nach dem Ausformen den Aussenmantel (8) des vorisolierten Fittings (1) bildet,
▪ Anbringen eines in der Form (2) innenliegenden Fittings (13), wobei das innenliegende Fitting (13) das Medium durchströmende Fitting im vorisolierten Fitting (1) bildet,
▪ Verschliessen der Stirnseiten (6) der Form (1) mittels Abschlusskappen (14),
▪ Einbringen eines flüssigen Isolationsmaterials in den zwischen der Innenkontur (7) der Form (2), der Abschlusskappen (14) und dem innenliegenden Fitting (13) gebildeten Hohlraum und
▪ Entfernen der Form (2) und der Abschlusskappen (14).

2. Verfahren nach Anspruch 1, **dadurch gekennzeichnet, dass** die Form (2) durch zwei sich gegenüberliegende Formhälften (3) gebildet wird.

3. Verfahren nach einem der Ansprüche 1 oder 2, **dadurch gekennzeichnet, dass** die Beschichtung (12) auf eine Silikonhaltige Innenkontur (7) appliziert wird.

4. Verfahren nach Anspruch 2 oder 3, **dadurch gekennzeichnet, dass** die Formhälfte (3) unteranderem durch ein Innenkontur (7) aufweisendes Trennschild (4) gebildet wird.

5. Verfahren nach einem der Ansprüche 2 bis 4, **dadurch gekennzeichnet, dass** die Formhälfte (3) durch eine kohlefaserverstärkte Aussenschicht und die Innenkontur (7) durch ein Trennschild (10) aus Silikon gebildet wird.

6. Verfahren nach einem der Ansprüche 1 bis 5, **dadurch gekennzeichnet, dass** die Beschichtung (12) der Innenkontur (7) durch ein flüssiges Polyurea das aufgetragen wird, gebildet wird.

7. Verfahren nach einem der Ansprüche 1 bis 6, **dadurch gekennzeichnet, dass** das flüssige Isolationsmaterial durch einen Polyurethan-Schaum gebildet wird.

8. Verfahren nach einem der Ansprüche 1 bis 7, **dadurch gekennzeichnet, dass** die Beschichtung (12) an der Innenkontur (7) durch Sprühen oder Streichen aufgetragen wird.

9. Verfahren nach einem der Ansprüche 1 bis 8, **dadurch gekennzeichnet, dass** das innenliegende Fitting (13) konzentrisch in der Form angeordnet wird.

10. Verfahren nach einem der Ansprüche 1 bis 9, **dadurch gekennzeichnet, dass** an den Enden des innenliegenden Fittings (13) die Abschlusskappen (14) angeordnet werden, wodurch das innenliegende Fitting (13) gegenüber der Innenkontur (7) der Form (2) zentriert wird und gleichzeitig die Stirnseiten (6) der Form (2) verschliesst.

11. Verfahren nach einem der Ansprüche 1 bis 10, **dadurch gekennzeichnet, dass** ein innenliegendes Fitting (13) mit einem Innendurchmesser von ≥ 250mm angeordnet wird.

12. Vorisoliertes Fitting (1) hergestellt nach dem Verfahren nach einem der Ansprüche 1 bis 11, **dadurch gekennzeichnet, dass** das vorisolierte Fitting (1) einen Aussenmantel (11), der durch eine ausgehärtete Beschichtung (12) gebildet ist, ein innenliegendes Fitting (13) und eine dazwischen angeordnete Isolationsschicht beinhaltet.
